# EUROPEAN PATENT SPECIFICATION

(11) **EP 3 801 824 B1**
(45) Date of publication and mention of the grant of the patent: **20.07.2022**
(21) Application number: 18734755.4
(22) Date of filing: 11.06.2018
(51) Int. Cl.: B01D 46/24, B01D 46/48, B01D 46/52

(54) **A REPLACEABLE AIR FILTER UNIT AND AN AIR FILTER ARRANGEMENT**
AUSWECHSELBARE LUFTFILTEREINHEIT UND LUFTFILTERANORDNUNG
UNITÉ DE FILTRE À AIR REMPLAÇABLE ET AGENCEMENT DE FILTRE À AIR

(43) Date of publication of application: 14.04.2021
(73) Proprietor: VOLVO TRUCK CORPORATION, 405 08 Göteborg (SE)
(72) Inventor: LEJESTRAND, Fredrik, 444 60 Stora Höga (SE); MILANSON, Oliver, 433 50 Öjersjö (SE); RÖNNINGS, Hans, 417 60 Göteborg (SE)
(74) Representative: Kransell & Wennborg KB
(86) International application number: PCT/EP2018/065383
(87) International publication number: WO 2019/238210

(56) References cited:
- DE-A1-102015 214 771
- GB-A- 2 347 875
- US-A- 5 718 825

## Description

### TECHNICAL FIELD

The invention relates to a replaceable air filter unit for filtering air to be supplied to an internal combustion engine in a vehicle, said replaceable air filter unit forming a sleeve about a central axis and extending along said axis between a first end and a second end, for axial insertion into a filter housing with said first end leading the axial insertion. The air filter unit forms an outer sleeve surface bounded by an outer filter radius for receiving unfiltered air, and an inner sleeve surface bounded by an inner filter radius for output of filtered air. The invention also relates to an air filter arrangement, a method and a vehicle.

The invention can be applied in heavy-duty vehicles, such as trucks, buses and construction equipment. Although the invention will be described with respect to a truck, the invention is not restricted to this particular vehicle, but may also be used in other vehicles such as buses and construction equipment.

### BACKGROUND

An internal combustion engine receives air to combust fuel in a combustion chamber to produce power. Such an engine is provided with an intake system in order to supply air from the outside of the vehicle to the internal combustion engine.

The air intake system of a vehicle may include an air intake followed by an intake duct, for supplying air to an air cleaner arrangement. The air cleaner arrangement typically comprises an air cleaner housing in which an air filter is arranged, to filter the air from dust by passage through the air filter before reaching the internal combustion engine. Air cleaner arrangements and air filters may be designed in many different shapes and configurations. The most common solution in today's trucks is to use a cylindrical air cleaner housing with a cylindrical air filter.

The air filter needs to be replaced on a regular basis (from e.g. every month to every second year) to keep the air cleaning function on a desired level. When the air filter is changed, a lot of dust will usually remain on the inside of the air cleaner housing. Cleaning the inside of the air cleaner housing is time consuming and often un-ergonomic work. Also, there is a risk that the dust from the inside of the air cleaner housing will reach portions of the air intake system downstream the air cleaner, such as the air-inlet to a turbo.

US 6 391 073 relates to an air cleaner including a cylindrical cleaning filter, and a case rotatably receiving the cleaning filter therein. A dust-removing brush is disposed to contact with a filter portion of the cleaning filter, and a manipulating device coupled to the cleaning filter and accessible from outside the case enables the cleaning filter to be rotated from outside the case. The brush is hence arranged to clean the cleaning filter.

Further, GB 2 347 875 relates to a gas liquid filter element including a radially outwardly extending flexible wiper seal, which engages an inner side wall of the filter chamber of a filter housing, so that when replaced, solid residue is removed from the chamber.

Still further, DE 10 2015 214771 relates to a liquid filter with a filter housing and a ring filter element arranged with a pleated star, which is involved in a first end plate and a second end plate in front.

Moreover, US 5,718,825 relates to a liquid filter, such as an oil or gas filter, which has a cup-shaped cylindrical filter housing to be mounted in a vertical orientation, with a releasable cover closing the filter housing.

As such, it would be desirable to diminish the problem with dust remaining in the air cleaner housing when replacing the air filter in an air cleaning arrangement.

### SUMMARY

An object of the invention is to provide an air cleaner arrangement, which provides for easier cleaning of the air cleaner housing from remaining dust.

The object is achieved by a replaceable air filter unit according to claim 1.

As such, the present invention relates to a replaceable air filter unit for filtering air to be supplied to an internal combustion engine in a vehicle, said replaceable air filter unit forming a sleeve about a central axis and extending along said axis between a first end and a second end, for axial insertion into a filter housing with said first end leading the axial insertion, said air filter unit forming an outer sleeve surface bounded by an outer filter radius (Ro) for receiving unfiltered air, and an inner sleeve surface bounded by an inner filter radius (Ri) for output of filtered air.

According to the present invention, an axially flexible skirt is circumferentially arranged at the first end of the air filter unit and extending radially outside the outer filter radius (Ro), for wiping an inner surface of the filter housing when the air filter unit is axially removed from the filter housing.

The axially flexible skirt is to be flexible such that, while the air filter unit is axially removed from a use position within the filter housing, the skirt may contact the surrounding inner walls of the air filter housing, so as to sweep any dust gathered on the inner walls out along an axial direction. Accordingly, by provision of the axially flexible skirt, the main part of any dust collected inside the filter housing will follow the filter unit out at the filter replacement. This will reduce the working time needed for replacing the filter by omitting the separate manual cleaning procedure, and thereby also avoid the un-ergonomic cleaning work. Further, the risk for dust entering downstream portions of the air intake arrangement, such as the air inlet to the turbo is reduced.

The skirt being circumferentially arranged at the first end of the filter unit, means that it extends along the circumference of the filter unit, such that it may contact the surrounding inner walls of the air filter housing.

It will be understood that the radial extension of the skirt may be adjusted to the shape of the filter housing into which the filter unit is to be arranged.

Optionally, the axially flexible skirt may be elastic.

Optionally, the filter unit is disposable. The air filter unit being disposable means that it will be used only once and then discarded. This means that no cleaning procedure is necessary to clean the filter unit per se. Instead, a new filter unit is arranged in the filter housing, when a used filter unit is discarded.

Optionally, the flexible skirt extends radially outside the outer filter radius (Ro) with a radial length from the outer filter radius (Ro) being 2mm - 30 mm, preferably 5mm - 20 mm. Optionally, the flexible skirt extends radially outside the outer filter radius (Ro) with a radial length from the outer filter radius (Ro) being less than 30 mm, preferably less than 20 mm. Optionally, the skirt extends radially outside the outer filter radius (Ro) with a radial length from the outer filter radius (Ro) being greater than 2 mm, preferably greater than 5mm.

Optionally, the skirt extends radially outside the outer filter radius (Ro) with a radial length from the central axis X being at least 100 mm, preferably between 100 and 300 mm.

As mentioned in the above, the radial extension of the skirt may be adapted to the corresponding filter housing. If the distance between the outer filter radius (Ro) and the inner wall of the filter housing is a difference D, then the skirt may advantageously extend a distance at least D, preferably greater than D, from the outer filter radius (RO). Hence the skirt may extend with a radial length from the central axis X being an overlap length greater than the radial distance from the central axis X to the inner wall of the filter housing. Said overlap length may advantageously be less than 20 mm, preferably between 5mm and 15mm. Optionally, said overlap length may be less than 10 mm.

Optionally and according to an example embodiment not forming part of the scope of protection, the radial length of the flexible skirt from the central axis X may be constant along the entire circumference of the filter unit.

However, the radial length of the flexible skirt from the central axis X need not be constant over the entire circumference of the filter unit. Instead, the radial length is varied along the circumference of the filter unit. In this case, the flexible skirt is adapted to a filter housing having inner walls with varying distance to the central axis X.

Optionally, the flexible skirt has a thickness in the axial direction, said thickness being less than 20 mm, preferably between 5mm and 15mm. The thickness may be adapted so as to provide an appropriate flexibility to the skirt to perform the sweeping of the inside of the filter housing.

Optionally, the flexible skirt may be formed as a continuous flexible member. For example, the flexible skirt may be formed as a disc of a flexible material, such as rubber.

Optionally, the flexible skirt may be formed by a plurality of flexible members. For example, a plurality of members of a flexible material, such as rubber, may be arranged along the circumference of the outer sleeve surface, so as to form a brush for sweeping the dust. In another example, the flexible skirt may be formed by a plurality of bristles. Such bristles may hence be arranged in a sufficient amount so as to form a brush for sweeping the dust.

Optionally the sleeve formed by said filter unit is a cylindrical sleeve or conical sleeve. With cylindrical is meant a sleeve having straight parallel sides and a circular or oval cross section. Preferably, the cylindrical sleeve may have a circular cross section. With conical is meant having the shape of a cone, i.e. having straight sides tapering towards one end. A conical sleeve would generally have the shape of a truncated cone.

Optionally, for the replaceable air filter unit, the outer filter radius (Ro) may be between 100mm and 200 mm, and/or an axial length between the first end and the second end may be between 300 mm and 500 mm.

Optionally, an outer border of the flexible skirt forms an irregular contour about the longitudinal axis X. Irregular is here to be seen in contrast to a regular contour such as a rectangle, square, circle or oval. An irregular contour may be particularly adapted to the inner contour of the inner walls of the corresponding filter housing.

Optionally, the filter unit may comprise a pleated filter member, preferably said pleated filter member forms a sleeve comprising an outer filter surface for receiving unfiltered air and an inner filter surface for output of filtered air.

Optionally, the filter unit may comprise at least one reinforcement member, preferably said axially flexible skirt is arranged to said reinforcement member.

Typically, a reinforcement member is arranged in an air filter unit to reinforce a filter member such as a pleated filter member. The reinforcement member may be made by a material providing stiffness to the filter unit, for example it may be made by a plastic material, such as a PUR (polyurethane) material.

A reinforcement member may be present at the first end and/or at the second end of the filter unit. Optionally or additionally, a reinforcement member may form a cage structure along the inner sleeve surface of the filter unit.

A second aspect of the present invention relates to an air filter arrangement for filtering air to be supplied to an internal combustion engine in a vehicle. As such, the air filter arrangement comprises a replaceable air filter unit forming a sleeve about a central axis (X) and extending axially between a first end and a second end, the air filter unit having an outer sleeve surface for receiving unfiltered air, and an inner sleeve surface for output of filtered air. The air filter arrangement further comprises a filter housing forming a filter cavity being adapted for axial introduction and removal of the filter unit into/from the cavity, such that said first end of the filter unit is trailing during axial removal of the filter unit from the filter housing.

In accordance with the second aspect of the invention, the air filter arrangement further comprises a resilient skirt being arranged at the first end of the air filter unit and extending radially from the filter unit so as to contact an inner surface of the filter cavity which inner surface circumferentially surrounds said filter unit when arranged in the cavity. Said skirt and inner surface are adapted to ensure contact between the skirt and the surrounding inner surface during said axial removal of the air filter unit from the filter housing.

The object of the invention is achieved by the second aspect of the invention, where the resilient skirt and the inner surface of the housing may be in contact during axial removal of the filter unit from the filter housing, so as to sweep dust gathered on the inner walls out with the filter unit.

The resilient skirt may be resilient in a radial direction and/or an axial direction. The resilient skirt may hence be selected so as to ensure the contact required to perform the sweeping.

The contact during axial removal of the filter unit from the filter housing should be ensured along at least an axial length of the filter cavity. Optionally, the contact during axial removal may be ensured along at least ¼, preferably at least ½, most preferred at least ¼ of an axial length of the filter cavity, as measured from the location at the inner surface of the cavity which contacts the skirt when the filter unit is in a use position in said cavity. Naturally, it is preferred that the contact is ensured from said location at the inner surface of the cavity, and along at least said axial length. Accordingly, at least the debris gathered in the innermost portion of the cavity will be swept towards an opening of the cavity, which facilitates cleaning of the cavity.

Optionally, said contact during axial removal may be ensured along essentially the full axial length of the filter cavity, as seen from the location at the inner surface of the cavity which contacts the skirt when the filter unit is in a use position.

Optionally, said contact during axial removal between the skirt and the inner surface of the filter cavity may be constant. However, where the inner surface of the filter cavity comprises an opening for an air inlet, it is understood that the skirt need not contact an opening. Should any debris risk falling into such an air inlet opening during the sweeping of the skirt over the inner surface of the cavity, this may be accepted since the skirt will still perform the function of cleaning the cavity of the housing.

Optionally, the resilient skirt may be an axially flexible skirt.

Optionally, the resilient skirt may be elastic.

Optionally, the skirt and the inner surface of the filter cavity are adapted such that the skirt exerts a radial pressure towards the inner surface during the complete axial removal of the air filter unit from the filter housing. When the skirt exerts a radial pressure towards the inner surface, the continuous contact between the skirt and the inner surface may be ensured. The radial pressure may be accomplished by the resilient skirt being in a compressed and/or flexed condition when present in the filter housing and circumferentially surrounded by said inner surface.

Optionally, the skirt, when the filter unit is in a released condition, has an outer circumference perpendicular to the axial direction (x) which outer circumference overlaps every coaxial inner circumference of the inner wall of the filter cavity along said axial direction (X), said overlap being less than 20 mm, preferably between 5mm and 15mm.

Optionally, the outer circumference and said inner circumference are irregular.

Optionally, the air filter unit is an air filter unit according to the first aspect of the invention.

Generally, it will be understood that features and advantages described herein with reference to the first aspect of the invention may equally be applied to the second aspect of the invention, and vice versa. To this end, features described in relation to the axially flexible skirt of the first aspect of the invention, are applicable also to the resilient skirt of the second aspect of the invention, even if the resilient skirt would not necessarily be axially flexible.

A third aspect not forming scope of protection of the invention relates to a method for removing dust or debris from an air filter arrangement according to the second aspect of the invention, comprising the step of:
removing said air filter unit from said filter cavity by axial displacement of the air filter unit in relation to said filter cavity, while sweeping dust or debris present in the filter cavity (out by the resilient skirt sweeping over the inner wall of the filter cavity.

A fourth aspect of the invention relates to a vehicle comprising an air filter unit according to the first aspect of the invention, and/or an air filter arrangement according to the second aspect of the invention.

Again, it will be understood that features and advantages described herein with reference to the first aspect and/or second of the invention may equally be applied to the third and/or fourth aspect of the invention, and vice versa.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic view of a vehicle;
Fig. 2 is a schematic view of an air intake system;
Figs 3a and 3b are perspective schematic views of an embodiment of a replaceable air filter unit not forming part of the scope of protection;
Fig. 4 is a split view of an embodiment of an air filter arrangement including the air filter unit of Figs 3a and 3b not forming part of the scope of protection;
Fig. 5 is an assembled view of the air filter arrangement of Fig. 4 not forming part of the scope of protection;
Fig. 6a is a perspective view of a second embodiment of a replaceable air filter unit;
Fig. 6b is a perspective view of a third embodiment of a replaceable air filter unit not forming part of the scope of protection.

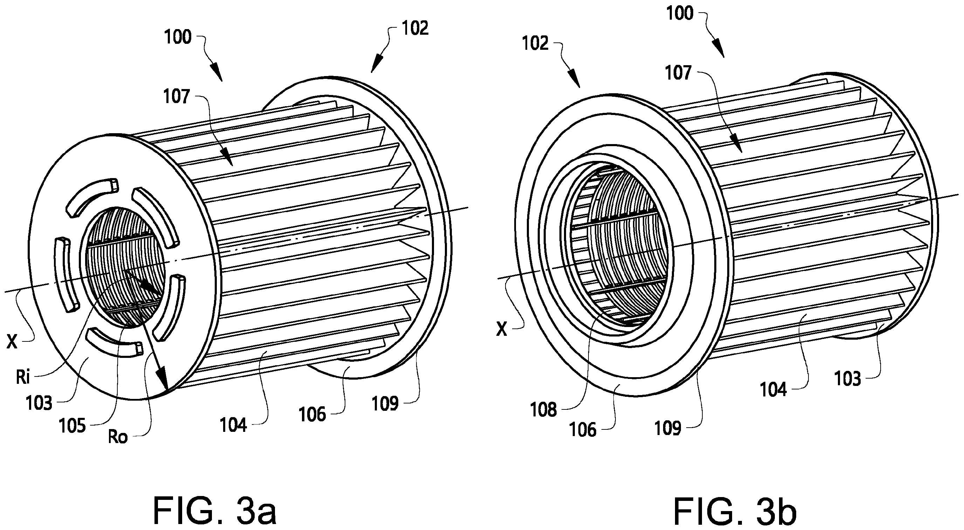

In Figs 3a to 6b, like reference numbers refer to similar features.

### DETAILED DESCRIPTION OF EXAMPLE EMBODIMENTS OF THE INVENTION

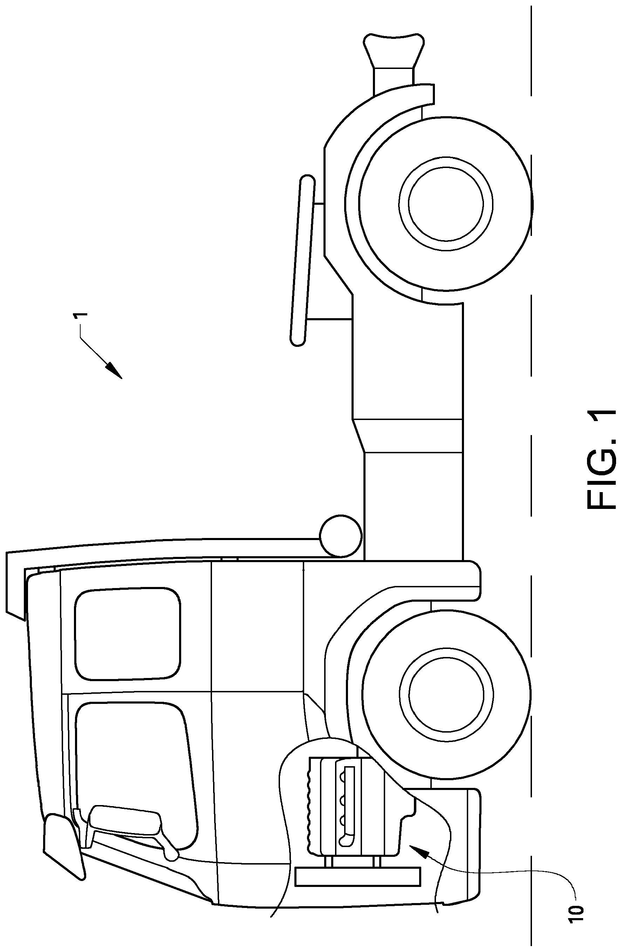

The invention will be described below for a vehicle in the form of a truck 1 such as the truck illustrated in Fig. 1. The truck 1 should be seen as an example of a vehicle which could comprise an air supply arrangement according to the present invention and/or a separator as described herein.

However, the present invention may be implemented in a plurality of different types of vehicles. Purely by way of example, the present invention could be implemented in a truck, a tractor, a car, a bus, a work machine such as a wheel loader or an articulated hauler, or any other type of construction equipment.

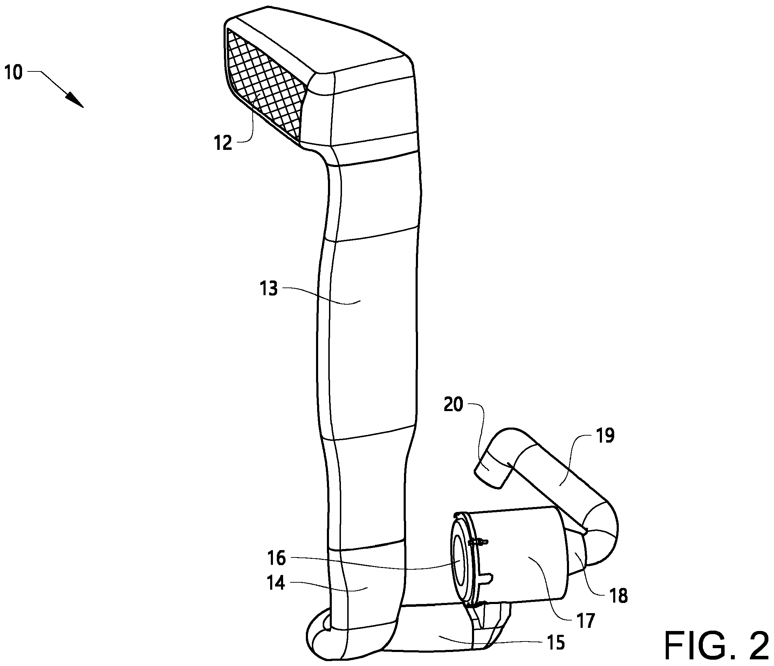

The Fig. 1 vehicle 1 comprises an air intake system 10 as illustrated in Fig. 2. An air intake system 10 is generally arranged so as to supply air from the outside of a vehicle, e.g. from the outside of the cab, to an internal combustion engine of the vehicle.

The air intake system 10 of Fig. 2 will now be described as an example. However, it is to be understood that the present invention may be applied also in other variants of air intake systems.

The air intake system 10 of Fig. 2 comprises an air intake 12 in connection with outside air. The air intake is in communication with an air duct 13 for transferring air further into the vehicle. The exemplified air duct 13 has an elongated shape which is arranged in a generally vertical direction (with respect to a vertical direction of the vehicle). The air duct 13 leads the air to a bellow 14, which in turn is connected to a turn chamber 15. From the turn chamber 15 the air is fed further downstream to an air cleaner 16,17, comprising an air cleaner housing 17 and an air cleaner cover 16. Inside the air cleaner housing 17, an air filter (not visible in Fig. 2) is arranged. The air cleaner cover 16 is removable from the air cleaner housing 17 so as to enable replacement of the air filter when necessary.

The air cleaner housing 17 is in connection with an air cleaner rubber bellow 18 which is in turn connected an intermediate pipe 19. Downstream the intermediate pipe 19, there is a turbo inlet, here in the form of a turbo inlet rubber bellow 20. From the turbo inlet, the air will continue downstream towards an internal combustion engine (not shown in Fig. 2).

It is to be understood that the illustrated air intake system 10 is exemplary, and that the invention may be applied to numerous variants of air intake systems. In the following, exemplary embodiments of the invention will be described with reference to Figs. 3 to 6.

Fig. 3a and 3b illustrate an embodiment of a replaceable air filter unit 100 for filtering air to be supplied to an internal combustion engine in a vehicle. The embodiment of Figs. 3a and 3b does not form part of the scope of protection. To this end, the air filter unit 100 will in use be arranged in a corresponding filter housing 200. For example, such a filter housing 200 may be an air cleaner housing 17 as illustrated in Fig. 2. However, it is to be understood that the air filter unit 100 and the air filter arrangement 300 as described herein may be used also in other variants of air intake systems.

The air filter unit 100 is replaceable, meaning that when the air filter unit 100 has been filled with particles from the filtered air to an extent that its efficiency is impaired, it will be removed from the air filter housing and replaced.

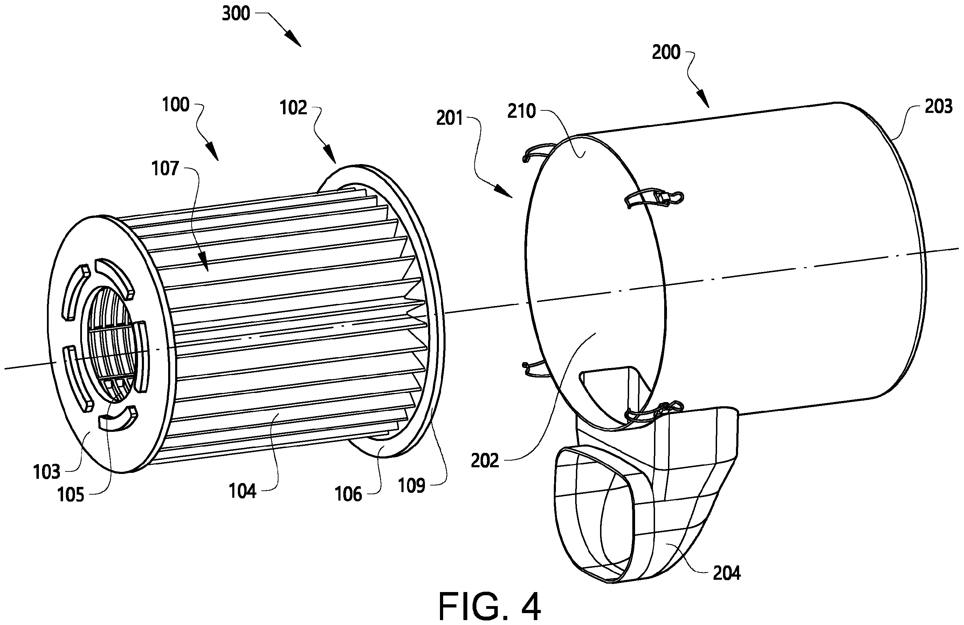

As seen in Figs 3a, 3b, the replaceable air filter unit 100 forms a sleeve about a central axis (X) and extends along said axis (x) between a first end 102 and a second end 103. The air filter unit 100 is hence adapted for axial insertion into or removal from a filter housing 200 (see Fig. 4), with said first end 102 leading the axial insertion.

The filter unit 100 forms an outer sleeve surface 104 bounded by an outer filter radius (Ro) for receiving unfiltered air, and an inner sleeve surface 105 bounded by an inner filter radius (Ri) for output of filtered air.

When the filter unit 100 is in use for filtering particles away from an air stream flowing from the outer sleeve surface 104 towards the inner sleeve surface 105, many particles will be trapped inside the air filter unit 100. However, some particles may remain outside of the air filter unit 100 or loosen from the air filter unit 100, so as to gather outside the filter unit 100 per se, that is, in the corresponding filter housing 200.

The shape and dimensions of the air filter unit 100 may be such as is generally known in the art, in particular for cleaning of air to combustion engines in vehicles. For example, the air filter unit 100 may be cylindrical or conical as described in the above. For example, the filter unit 100 diameters (at Ro and Ri) may be about 200 to 400 mm, and the axial length between the first end 102 and the second end 103 be about 300mm to 500 mm.

The filter material of the filter unit 100 may be any filter material suitable for the purpose of filtering air to an internal combustion engine. For example the filter unit 100 may comprise a pleated filter material.

Moreover, the filter unit 100 may comprise at least one reinforcement member 108. In this case, as in the embodiment of Figs. 3a, 3b, the axially flexible skirt 106 (which will be further described in the following) may be arranged to the reinforcement member 108. As seen in Fig 3b, in the illustrated filter unit 100, a reinforcement member 108 is present at the first end 102 and at the second end 103, where the reinforcement member 108 forms annular covers over the axial ends of the pleated filter material. Moreover, the reinforcement member 108 forms a cage structure on the inside 105 of the filter unit 100.

Preferably, the filter unit 100 is disposable, meaning that it will be used only once and then discarded. In this case, the filter unit 100 materials may be selected as disposable materials, e.g. relatively inexpensive.

The filter unit 100 of Figs. 3a, 3b further comprises a resilient skirt 106 arranged at the first end 102 of the air filter unit 100. The skirt 106 extends radially outside the outer filter radius (Ro), for wiping an inner surface 202 of the filter housing 200 when the air filter unit 100 is axially removed from the filter housing 200. To this end, the skirt 106 may be adapted to an inner surface 202 of the filter housing.

The function of the skirt 106 may be further described with reference to fig. 4, which illustrates an air filter arrangement 300 for filtering air to be supplied to an internal combustion engine in a vehicle, the air filter arrangement 300 comprising a replaceable air filter unit 100 and a filter housing 200 forming a filter cavity 201 being adapted for axial introduction and removal of the filter unit 100 into the cavity 201. The embodiment of Fig. 4 does not form part of the scope of protection.

The filter housing 200 comprises a radial air inlet 204 for incoming air to be directed towards the outer sleeve surface 104 of the air filter 100. The filter housing 200 comprises a central air outlet 203 for outgoing air having passed through the filter unit 100. In use, the filter housing 200 will be closed by a lid attached over the opening of the filter cavity 201, opposite the central air outlet 203. The filter housing 200 and/or the filter unit 100 may further comprise sealing means, axial and/or rotational securing means etc. as is known in the art to ensure air tight connections where necessary to achieve the desired air flow through the filter unit 100.

As seen in Fig. 4, the first end 102 of the filter unit 100 will be trailing during axial removal of the filter unit 100 from the filter housing 200. The resilient skirt 106 being arranged at the first end 102 of the air filter unit 100 extends radially from the filter unit 100 so as to contact an inner surface 202 of the filter cavity 201 axially surrounding said filter unit 100 (when in the cavity 201).

The skirt 106 and inner surface 202 are adapted to ensure contact between the resilient skirt 106 and the surrounding inner surface 202 during said axial removal of the air filter unit 100 from the filter housing 200.

As mentioned in the above, when in use, some particles removed from the air stream by passage of the air through the filter unit 100, will gather inside the filter housing 200. When removing the filter unit 100 from the filter housing 200 for replacement thereof, the contact between the skirt 106 and the surrounding inner surface 202 will ensure that the skirt 106 sweeps any such particles out in an axial direction.

Hence, the inner surface 202 of the filter housing 200 is cleaned from particles while the filter unit 100 is removed from the housing, thereby omitting any need for separate cleaning procedures.

The flexible skirt 106 may extend radially outside the outer filter radius (Ro) with a radial length from the outer filter radius (Ro) being 2mm - 30 mm, preferably 5mm - 20 mm. In the illustrated embodiment, the flexible skirt 106 extends with a radial length from the outer filter radius (Ro) being a bout 10mm.

The flexible skirt 106 may extend radially outside the outer filter radius Ro with a radial length from the central axis X being at least 100 mm, preferably between 100 and 300 mm.

The radial length of the skirt 106 need not be constant over the circumference of the filter unit 100. However, the skirt 106 and the inner surface 202 of the filter cavity 201 may be adapted to each other, such that the skirt, when the filter unit 100 is in a released condition, has an outer circumference perpendicular to the axial direction (x) which outer circumference overlaps every coaxial inner circumference 210 of the inner wall 202 of the filter cavity 201 along said axial direction (X), so as to ensure the above-mentioned continuous contact.

Such an overlap may be less than 20 mm, preferably between 5mm and 15mm.

Accordingly, depending on the inner surface 202 of the corresponding housing 200, the outer border 109 of the flexible skirt 106 may form an irregular or a regular contour about the longitudinal axis X. (With regular is meant herein a regular geometric figure such as a circle, an oval, a rectangle, etc)

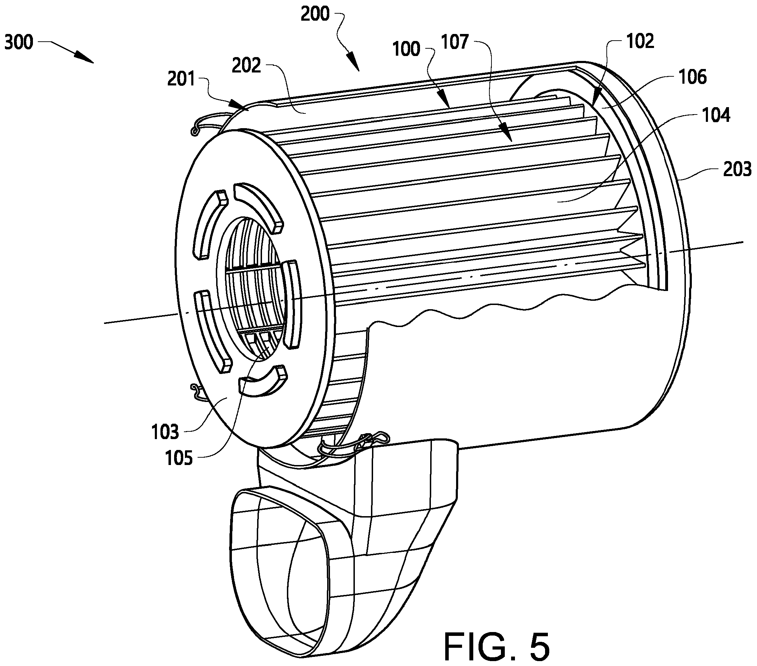

As may be gleaned from Figs. 3a to 5, in this embodiment the outer border of the flexible skirt 106 forms a regular contour, i.e. a circle about the longitudinal axis X. The embodiment of Fig. 5 does not form part of the scope of protection.

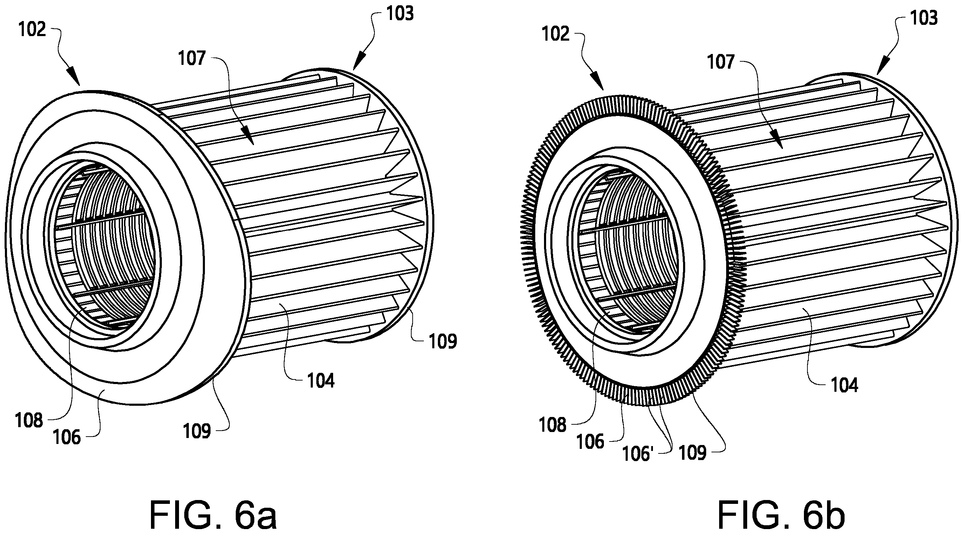

Fig. 6a illustrates another embodiment, wherein the outer border 109 of the flexible skirt 106 forms an irregular contour about the longitudinal axis X, so as to adapt to the shape of the inner surface of a corresponding filter housing.

The skirt 106 is resilient so as to enable the skirt 106 to follow the inner walls 202 during axial removal of the filter unit 100 from the housing 200, so as to ensure continuous contact.

With resilient is meant that the skirt 106 may yield to pressure from such surrounding inner walls. Advantageously, the skirt 106 may be elastic, meaning that the skirt 106 may yield to pressure from such surrounding inner walls, but will also strive to resume its original shape after release of any such pressure. In particular, the skirt 106 may be axially flexible, meaning that the skirt may be bent in an axial direction so as to adapt to pressure from surrounding inner walls.

It is preferred that the skirt 106 and the inner surface 202 of the filter cavity 201 are adapted such that the skirt 106 exerts a radial pressure towards the inner surface 202 during the complete axial removal of the air filter unit 100 from the filter housing 200.

In the embodiment of Figs. 3a to 6a, the skirt 106 is formed as a continuous member. In other words, the skirt 106 forms a continuous disc radiating from the outer radius of the sleeve. In this case, skirt 106 may for example be formed from a suitable elastic material such as rubber.

However, optionally the flexible skirt 106 may be formed by a plurality of flexible members. For example, a plurality of plate-shaped members may be arranged side by side along the circumference of the sleeve, so as to still ensure that the complete inner walls of the corresponding filter housing 200 will be swept by the skirt 106.

The skirt 106 may for example have a thickness in an axial direction being less than 20 mm, preferably between 5mm and 15mm. With such a thickness a skirt 106 being not only resilient, but also flexible in an axial direction may be realized.

In another embodiment, as illustrated in Fig. 6b, the flexible skirt 106 is formed by a plurality of bristles 106'. The number, size and shape of the bristles 106' may naturally be adapted to ensure that the complete inner walls of the corresponding filter housing 200 will be swept by the skirt 106. The embodiment of Fig. 6b does not form part of the scope of protection.

Referring again to Figs 4 and 5 it is understood how a method for removing dust or debris from an air filter arrangement 300 may be realized, the method comprising the step of: removing said air filter unit 100 from said filter cavity 201 by axial displacement of the air filter unit 100 in relation to said filter cavity 201, while sweeping dust or debris present in the filter cavity 201 out by the resilient skirt 106 sweeping over the inner wall 202 of the filter cavity 201.

It is to be understood that the present invention is not limited to the embodiments described above and illustrated in the drawings; rather, the skilled person will recognize that many changes and modifications may be made within the scope of the appended claims.

## Claims

1. A replaceable air filter unit (100) for filtering air to be supplied to an internal combustion engine in a vehicle, said replaceable air filter unit (100) forming a sleeve about a central axis (X) and extending along said axis (x) between a first end (102) and a second end (103), for axial insertion into a filter housing (200) with said first end (102) leading the axial insertion, said air filter unit (100) forming an outer sleeve surface (104) bounded by an outer filter radius (Ro) for receiving unfiltered air, and an inner sleeve surface (105) bounded by an inner filter radius (Ri) for output of filtered air; wherein an axially flexible skirt (106) being circumferentially arranged at the first end (102) of the air filter unit (100) and extending radially outside the outer filter radius (Ro), for wiping an inner surface (202) of the filter housing (200) when the air filter unit (100) is axially removed from the filter housing (200) **characterized in that** a radial length of the flexible skirt (106), from the central axis (X), is varied along the circumference of the filter unit.

2. An air filter unit according to claim 1, which air filter unit (100) is disposable.

3. An air filter unit according to claim 1 or claim 2 wherein the flexible skirt (106) extends radially outside the outer filter radius (Ro) with a radial length from the outer filter radius (Ro) being 2mm - 30 mm, preferably 5mm - 20 mm.

4. An air filter unit according to any one of the preceding claims, wherein the flexible skirt (106) has a thickness in the axial direction, said thickness being less than 20 mm, preferably between 5mm and 15mm.

5. An air filter unit according to any one of the preceding claims, wherein the flexible skirt (106) is formed by a continuous flexible member.

6. An air filter unit according to any one of the claims 1 to 4, wherein the flexible skirt (106) is formed by a plurality of flexible members, preferably the flexible skirt (106) is formed by a plurality of bristles (106').

7. An air filter unit according to any one of the preceding claims, wherein the sleeve formed by said filter unit (100) is a cylindrical sleeve or a conical sleeve.

8. An air filter unit according to any one of the preceding claims, comprising a pleated filter member (107), preferably said pleated filter member (107) forms a sleeve comprising an outer filter surface for receiving unfiltered air and an inner filter surface for output of filtered air.

9. An air filter unit according to any one of the preceding claims, comprising at least one reinforcement member (108), preferably said axially flexible skirt (106) is arranged to said reinforcement member (108).

10. An air filter arrangement (300) for filtering air to be supplied to an internal combustion engine in a vehicle, the air filter arrangement (300) comprising a replaceable air filter unit (100) forming a sleeve about a central axis (X) and extending axially between a first end (102) and a second end (103), the air filter unit (100) having an outer sleeve surface (104) for receiving unfiltered air, and an inner sleeve surface (105) for output of filtered air, the air filter arrangement (300) further comprising
a filter housing (200) forming a filter cavity (201) being adapted for axial introduction and removal of the filter unit (100) into/from the cavity (201), such that said first end (102) of the filter unit (100) is trailing during axial removal of the filter unit (100) from the filter housing (200),
wherein a resilient skirt (106) being circumferentially arranged at the first end (102) of the air filter unit (100) and extending radially from the filter unit (100) so as to contact an inner surface (202) of the filter cavity (201), which inner surface (202) circumferentially surrounds said filter unit (100) when arranged in the cavity (201), said skirt (106) and inner surface (202) being adapted to ensure contact between the resilient skirt (106) and the surrounding inner surface (202) during axial removal of the air filter unit (100) from the filter housing (200), wherein, when the filter unit (100) is in a released condition, the skirt (106) has an outer border (109) about the longitudinal axis (X) which outer border overlaps every coaxial inner circumference (210) of the inner surface (202) of the filter cavity (201) along an axial length of the filter cavity (201), said overlap being less than 20 mm, preferably between 5mm and 15mm;
**characterized in that** a radial length of the flexible skirt (106), from the central axis (X), is varied along the circumference of the filter unit, the varying radial length corresponding to the shape of the inner circumference (210) of the inner surface (202) of the filter cavity (201).

11. An air filter arrangement according to claim 10, wherein the skirt (106) and the inner surface (202) of the filter cavity (201) are adapted such that the skirt (106) exerts a radial pressure towards the inner surface (202) during the axial removal of the air filter unit (100) from the filter housing (200).

12. An air filter arrangement according to any one of the claims 10 to 11, wherein said resilient skirt (106) is axially flexible.

13. An air filter arrangement according to any one of the claims 10 to 12, wherein the air filter unit (100) is an air filter unit according to any one of the claims 1 to 10.

14. A vehicle comprising an air filter unit (100) according to any one of the claims 1 to 9, and/or an air filter arrangement (300) according to any one of the claims 10 to 13.

## Patentansprüche

1. Auswechselbare Luftfiltereinheit (100) zum Filtern von Luft, die einem Verbrennungsmotor in einem Fahrzeug zugeführt werden soll, wobei die auswechselbare Luftfiltereinheit (100) eine Hülse um eine Mittelachse (X) bildet und sich entlang der Achse (X) zwischen einem ersten Ende (102) und einem zweiten Ende (103) erstreckt, zum axialen Einsetzen in ein Filtergehäuse (200), wobei das erste Ende (102) das axiale Einsetzen leitet, wobei die Luftfiltereinheit (100) eine äußere Hülsenfläche (104), die durch einen äußeren Filterradius (Ro) begrenzt ist, zur Aufnahme von ungefilterter Luft und eine innere Hülsenfläche (105), die durch einen inneren Filterradius (Ri) begrenzt ist, zur Ausgabe von gefilterter Luft; wobei eine axial flexible Schürze (106) in Umfangsrichtung am ersten Ende (102) der Luftfiltereinheit (100) angeordnet ist und sich radial außerhalb des äußeren Filterradius (Ro) erstreckt, um eine Innenfläche (202) des Filtergehäuses (200) abzuwischen, wenn die Luftfiltereinheit (100) axial aus dem Filtergehäuse (200) entfernt wird, **dadurch gekennzeichnet, dass** eine radiale Länge der flexiblen Schürze (106) von der Mittelachse (X) aus entlang des Umfangs der Filtereinheit variiert wird.

2. Luftfiltereinheit nach Anspruch 1, wobei die Luftfiltereinheit (100) ein Einwegartikel ist.

3. Luftfiltereinheit nach Anspruch 1 oder Anspruch 2, wobei sich die flexible Schürze (106) radial außerhalb des äußeren Filterradius (Ro) mit einer radialen Länge von 2 mm bis 30 mm, vorzugsweise 5 mm bis 20 mm, vom äußeren Filterradius (Ro) erstreckt.

4. Luftfiltereinheit nach einem der vorhergehenden Ansprüche, wobei die flexible Schürze (106) eine Dicke in axialer Richtung aufweist, die weniger als 20 mm, vorzugsweise zwischen 5 und 15 mm beträgt.

5. Luftfiltereinheit nach einem der vorhergehenden Ansprüche, wobei die flexible Schürze (106) durch ein durchgehendes flexibles Element gebildet ist.

6. Luftfiltereinheit nach einem der Ansprüche 1 bis 4, wobei die flexible Schürze (106) durch mehrere flexible Elemente gebildet ist, vorzugsweise ist die flexible Schürze (106) durch mehrere Borsten (106') gebildet.

7. Luftfiltereinheit nach einem der vorhergehenden Ansprüche, wobei die von der Filtereinheit (100) gebildete Hülse eine zylindrische Hülse oder eine konische Hülse ist.

8. Luftfiltereinheit nach einem der vorhergehenden Ansprüche, umfassend ein gefaltetes Filterelement (107), wobei das gefaltete Filterelement (107) vorzugsweise eine Hülse bildet, die eine äußere Filterfläche zur Aufnahme von ungefilterter Luft und eine innere Filterfläche zur Abgabe von gefilterter Luft umfasst.

9. Luftfiltereinheit nach einem der vorhergehenden Ansprüche, umfassend mindestens ein Verstärkungselement (108), wobei vorzugsweise die axial flexible Schürze (106) an dem Verstärkungselement (108) angeordnet ist.

10. Luftfilteranordnung (300) zum Filtern von Luft, die einem Verbrennungsmotor in einem Fahrzeug zugeführt werden soll, die Luftfilteranordnung (300) umfassend eine auswechselbare Luftfiltereinheit (100), die eine Hülse um eine Mittelachse (X) bildet und sich axial zwischen einem ersten Ende (102) und einem zweiten Ende (103) erstreckt, wobei die Luftfiltereinheit (100) eine äußere Hülsenfläche (104) zur Aufnahme von ungefilterter Luft und eine innere Hülsenfläche (105) zur Ausgabe von gefilterter Luft aufweist, die Luftfilteranordnung (300) ferner umfassend ein Filtergehäuse (200), das einen Filterhohlraum (201) bildet, der zum axialen Einführen und Entfernen der Filtereinheit (100) in den/aus dem Hohlraum (201) angepasst ist, so dass das erste Ende (102) der Filtereinheit (100) während des axialen Entfernens der Filtereinheit (100) aus dem Filtergehäuse (200) folgt,
wobei eine elastische Schürze (106) in Umfangsrichtung am ersten Ende (102) der Luftfiltereinheit (100) angeordnet ist und sich radial von der Filtereinheit (100) erstreckt, so dass sie eine Innenfläche (202) des Filterhohlraums (201) berührt, wobei die Innenfläche (202) die Filtereinheit (100) in Umfangsrichtung umgibt, wenn sie in dem Hohlraum (201) angeordnet ist, wobei die Schürze (106) und die Innenfläche (202) angepasst sind, um einen Kontakt zwischen der elastischen Schürze (106) und der umgebenden Innenfläche (202) während des axialen Entfernens der Luftfiltereinheit (100) aus dem Filtergehäuse (200) sicherstellen, wobei, wenn sich die Filtereinheit (100) in einem gelösten Zustand befindet, die Schürze (106) eine äußere Begrenzung (109) um die Längsachse (X) aufweist, wobei die äußere Begrenzung jeden koaxialen inneren Umfang (210) der inneren Oberfläche (202) des Filterhohlraums (201) entlang einer axialen Länge des Filterhohlraums (201) überlappt, wobei die Überlappung weniger als 20 mm, vorzugsweise zwischen 5 mm und 15 mm beträgt;
**dadurch gekennzeichnet, dass** eine radiale Länge der flexiblen Schürze (106), ausgehend von der Mittelachse (X), entlang des Umfangs der Filtereinheit variiert wird, wobei die variierende radiale Länge der Form des inneren Umfangs (210) der inneren Oberfläche (202) des Filterhohlraums (201) entspricht.

11. Luftfilteranordnung nach Anspruch 10, wobei die Schürze (106) und die Innenfläche (202) des Filterhohlraums (201) angepasst sind, dass die Schürze (106) beim axialen Entfernen der Luftfiltereinheit (100) aus dem Filtergehäuse (200) einen radialen Druck auf die Innenfläche (202) ausübt.

12. Luftfilteranordnung nach einem der Ansprüche 10 bis 11, wobei die elastische Schürze (106) axial flexibel ist.

13. Luftfilteranordnung nach einem der Ansprüche 10 bis 12, wobei die Luftfiltereinheit (100) eine Luftfiltereinheit nach einem der Ansprüche 1 bis 10 ist.

14. Fahrzeug mit einer Luftfiltereinheit (100) nach einem der Ansprüche 1 bis 9 und/oder einer Luftfilteranordnung (300) nach einem der Ansprüche 10 bis 13.

## Revendications

1. Unité de filtre à air remplaçable (100) destinée à filtrer de l'air à fournir à un moteur à combustion interne dans un véhicule, ladite unité de filtre à air remplaçable (100) formant un manchon autour d'un axe central (X) et s'étendant le long dudit axe (X) entre une première extrémité (102) et une seconde extrémité (103) pour insertion axiale dans un boîtier de filtre (200) avec ladite première extrémité (102) guidant l'insertion axiale, ladite unité de filtre à air (100) formant une surface de manchon intérieure (104) bornée par un rayon de filtre extérieur (Ro) destiné à recevoir de l'air non filtré, et une surface de manchon intérieure (105) bornée par un rayon de filtre intérieur (Ri) pour la sortie d'air filtré ; une jupe axialement flexible (106) étant disposée circonférentiellement à la première extrémité (102) de l'unité de filtre à air (100) et s'étendant radialement à l'extérieur du rayon de filtre extérieur (Ro) pour essuyer une surface intérieure (202) du boîtier de filtre (200) lorsque l'unité de filtre à air (100) est retirée axialement du boîtier de filtre (200), **caractérisée en ce qu'**une longueur radiale de la jupe flexible (106) à partir de l'axe central (X) varie le long de la circonférence de l'unité de filtre.

2. Unité de filtre à air selon la revendication 1, laquelle unité de filtre à air (100) est jetable.

3. Unité de filtre à air selon la revendication 1 ou la revendication 2, dans laquelle la jupe flexible (106) s'étend radialement à l'extérieur du rayon de filtre extérieur (Ro) avec une longueur radiale à partir du rayon de filtre extérieur (Ro) qui est 2 mm à 30 mm, de préférence 5 mm à 20 mm.

4. Unité de filtre à air selon une quelconque des revendications précédentes, dans laquelle la jupe flexible (106) a une épaisseur dans le sens axial, ladite épaisseur étant inférieure à 20 mm, de préférence comprise entre 5 mm et 15 mm.

5. Unité de filtre à air selon une quelconque des revendications précédentes, dans laquelle la jupe flexible (106) est formée d'un élément flexible continu.

6. Unité de filtre à air selon une quelconque des revendications 1 à 4, dans laquelle la jupe flexible (106) est formée d'une pluralité d'éléments flexibles, la jupe flexible (106) étant de préférence formée d'une pluralité de poils (106').

7. Unité de filtre à air selon une quelconque des revendications précédentes, dans laquelle le manchon formé par ladite unité de filtre (100) est un manchon cylindrique ou un manchon conique.

8. Unité de filtre à air selon une quelconque des revendications précédentes, comprenant un élément de filtrage plissé (107), ledit élément de filtrage plissé (107) formant de préférence un manchon comprenant une surface de filtre extérieure pour recevoir de l'air non filtré et une surface de filtre intérieure pour la sortie d'air filtré.

9. Unité de filtre à air selon une quelconque des revendications précédentes, comprenant au moins un élément de renfort (108), ladite jupe flexible axialement (106) étant de préférence disposée sur ledit élément de renfort (108).

10. Agencement de filtre à air (300) destiné à filtrer de l'air à fournir à un moteur à combustion interne dans un véhicule, l'agencement de filtre à air (300) comprenant une unité de filtre à air remplaçable (100) formant un manchon autour d'un axe central (X) et s'étendant axialement entre une première extrémité (102) et une seconde extrémité (103), l'unité de filtre à air (100) comportant une surface de manchon extérieure (104) destinée à recevoir de l'air non filtré, et une surface de manchon intérieure (105) pour la sortie d'air filtré, l'agencement de filtre à air (300) comprenant en outre un boîtier de filtre (200) formant une cavité de filtre (201) apte à une introduction axiale et à un retrait de l'unité de filtre (100) dans/hors de la cavité (201), de sorte que ladite première extrémité (102) de l'unité de filtre (100) est suiveuse pendant le retrait axial de l'unité de filtre (100) du boîtier de filtre (200),
une jupe élastique (106) étant disposée circonférentiellement à la première extrémité (102) de l'unité de filtre à air (100) et s'étendant radialement depuis l'unité de filtre (100) de manière à venir en contact avec une surface intérieure (202) de la cavité de filtre (201), laquelle surface intérieure (202) entoure circonférentiellement ladite unité de filtre (100) lorsqu'elle est disposée dans la cavité (201), lesdites jupe (106) et surface intérieure (202) étant aptes à assurer un contact entre la jupe élastique (106) et la surface intérieure environnante (202) pendant le retrait axial de l'unité de filtre à air (100) du boîtier de filtre (200), sachant que, lorsque l'unité de filtre (100) est en situation relâchée, la jupe (106) a une bordure extérieure (109) autour de l'axe longitudinal (X), laquelle bordure extérieure chevauche toute circonférence intérieure coaxiale (210) de la surface intérieure (202) de la cavité de filtre (201) sur une longueur axiale de la cavité de filtre (201), ledit chevauchement étant de moins de 20 mm, de préférence de 5 mm à 15 mm ;
**caractérisé en ce qu'**une longueur radiale de la jupe flexible (106) à partir de l'axe central (X) varie le long de la circonférence de l'unité de filtre, la longueur radiale variable correspondant à la forme de la circonférence intérieure (210) de la surface intérieure (202) de la cavité de filtre (201).

11. Agencement de filtre à air selon la revendication 10, dans lequel la jupe (106) et la surface intérieure (202) de la cavité de filtre (201) sont adaptées de manière à ce que la jupe (106) exerce une pression radiale vers la surface intérieure (202) pendant le retrait axial de l'unité de filtre à air (100) du boîtier de filtre (200) .

12. Agencement de filtre à air selon l'une quelconque des revendications 10 à 11, dans lequel ladite jupe élastique (106) est flexible axialement.

13. Agencement de filtre à air selon l'une quelconque des revendications 10 à 12, dans lequel l'unité de filtre à air (100) est une unité de filtre à air selon l'une quelconque des revendications 1 à 10.

14. Véhicule comprenant une unité de filtre à air (100) selon l'une quelconque des revendications 1 à 9, et/ou agencement de filtre à air (300) selon l'une quelconque des revendications 10 à 13.
